# EUROPEAN PATENT APPLICATION

(11) **EP 4 790 531 A1**
(43) Date of publication of application: **12.08.2026**
(21) Application number: 24889082.4
(22) Date of filing: 05.11.2024
(51) Int. Cl.: G06F 3/0484, G06F 3/04817, G06F 3/0482, G06N 3/04

(54) **METHOD FOR JOURNAL GENERATION AND ELECTRONIC DEVICE THEREFOR**

(30) Priority: 07.11.2023 KR 20230152744; 07.12.2023 KR 20230176656
(71) Applicant: Samsung Electronics Co., Ltd., Suwon-si, Gyeonggi-do 16677 (KR)
(72) Inventor: LEE, Myeongjin, Suwon-si Gyeonggi-do 16677 (KR); YEO, Jaeyung, Suwon-si Gyeonggi-do 16677 (KR); KIM, Jaepil, Suwon-si Gyeonggi-do 16677 (KR); PARK, Byeongju, Suwon-si Gyeonggi-do 16677 (KR); PARK, Jeongmin, Suwon-si Gyeonggi-do 16677 (KR); CHO, Sunghwan, Suwon-si Gyeonggi-do 16677 (KR)
(74) Representative: Gulde & Partner
(86) International application number: PCT/KR2024/017258
(87) International publication number: WO 2025/100894

(57) **Abstract**

An electronic device according to an embodiment disclosed herein may include a memory and at least one processor electrically connected to the memory. The at least one processor may be configured to determine, based on user information stored in the memory, a journal category and at least one journal component for generating a user journal, obtain, based on the determined journal category and at least one journal component, a user journal format, and generate the user journal in a format corresponding to the obtained user journal format.

## Description

### TECHNICAL FIELD

Embodiments disclosed herein relate to a method for generating a journal and an electronic device therefor.

### BACKGROUND ART

A user may write a journal (e.g., a diary, a daily life record, or the like) using an electronic device. For example, the user may write a journal by taking photo of food at a good restaurant and then recording the photo of the food and a desired message. For another example, after exercising, the user may write a journal including today's exercise routine and a photo of an exercise place or information about its location.

Meanwhile, a journaling application may assist the user in writing the journal by recommending content or a keyword to the user using the user's information.

The aforementioned information may be provided as related art for the purpose of assisting understanding of the present disclosure. No claim or determination is made as to whether any of the above matters constitutes the related art regarding to the present disclosure.

### DISCLOSURE OF THE INVENTION

### TECHNICAL SOLUTION

An electronic device according to an embodiment disclosed herein may include a memory and at least one processor electrically connected to the memory. The at least one processor may be configured to determine, based on user information stored in the memory, a journal category and at least one journal component for generating a user journal, obtain, based on the determined journal category and at least one journal component, a user journal format, and generate the user journal in a format corresponding to the obtained user journal format.

A method using an electronic device according to an embodiment disclosed herein may include determining, based on user information stored in the electronic device, a journal category and at least one journal component for generating a user journal, obtaining, based on the determined journal category and the at least one journal component, a user journal format, and generating the user journal in a format corresponding to the obtained user journal format.

A computer-readable storage medium according to an embodiment disclosed herein may store instructions, and the instructions, when executed by at least one processor of an electronic device, may cause the at least one processor to determine, based on user information stored in the memory of the electronic device, a journal category and at least one journal component for generating a user journal, obtain, based on the determined journal category and the at least one journal component, a user journal format, and generate the user journal in a format corresponding to the obtained user journal format.

### BRIEF DESCRIPTION OF THE DRAWINGS

FIG. 1 is an example interface of a journal generated using an electronic device according to an embodiment.
FIG. 2 is a block diagram illustrating a configuration of an electronic device according to an embodiment.
FIG. 3 is a block diagram of modules of an electronic device according to an embodiment.
FIG. 4 is a flow diagram illustrating generation of a user journal and/or a report using user information by an electronic device, according to an embodiment.
FIG. 5 is a flowchart illustrating journal generation operations of the electronic device according to an embodiment.
FIG. 6a is a flowchart illustrating operations for a user-written journal analysis module according to an embodiment.
FIG. 6b is a block diagram illustrating an operational structure of a user-written journal analysis module according to an embodiment.
FIG. 7 is a flowchart illustrating operations for identifying a category and a component from user information by an electronic device according to an embodiment.
FIG. 8 is a flowchart for determining journal generation or format generation based on an identified category and component by an electronic device according to an embodiment.
FIG. 9a is a flowchart illustrating operations for generating a new format by an electronic device according to an embodiment.
FIG. 9b is an exemplary view of a method of operation of a format generation module according to an embodiment.
FIG. 10 is a flowchart illustrating operations for generating a user journal by an electronic device according to an embodiment.
FIG. 11 is an exemplary view of a user interface (UI) of a journal list provided in an electronic device according to an embodiment.
FIG. 12 is an exemplary view of a user journal provided in an electronic device according to an embodiment.
FIG. 13 is an exemplary view of a journal format list provided in an electronic device according to an embodiment.
FIG. 14 is an exemplary view of a report provided in an electronic device according to an embodiment.
FIG. 15 is an exemplary view of a user journal written based on a user interest according to an embodiment.
FIG. 16 is a block diagram illustrating an electronic device in a network environment according to various embodiments.

With respect to the description of the drawings, the same or similar reference signs may be used for the same or similar elements.

### MODE FOR CARRYING OUT THE INVENTION

Hereinafter, various embodiments disclosed in the present disclosure will be described with reference to the accompanying drawings. However, this is not intended to limit the present invention to the specific embodiments, and it is to be construed to include various modifications, equivalents, and/or alternatives of embodiments of the present invention.

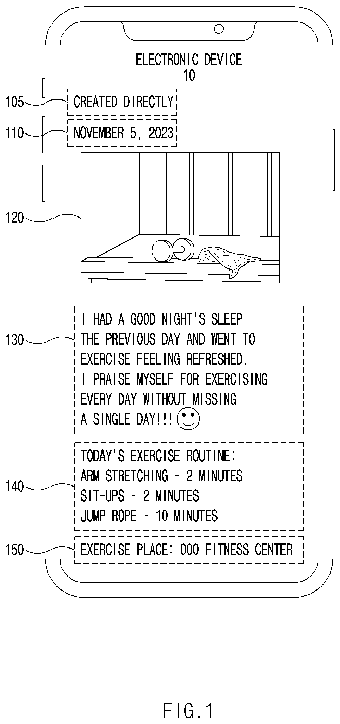

FIG. 1 is an example interface of a journal generated using an electronic device according to an embodiment.

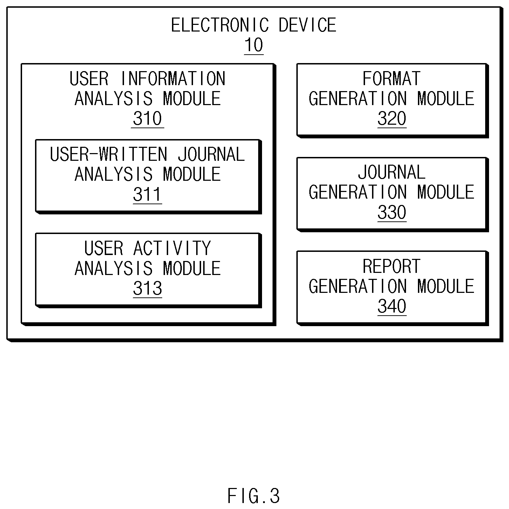

Referring to FIG. 1, a journal using an electronic device 10 may include image information 120 and/or text information 105, 110, 130, 140, and 150. The text information 105 may provide information as to whether the journal is a journal directly written by a user or a journal automatically generated. For example, in the case of FIG. 1, since the journal is a journal directly written by the user, the text information 105 indicating "directly used" may be written. For example, in the case of the journal being a journal generated by a journal generation module 330 of the electronic device 10 to be described below with reference to FIG. 3, the text information 105 may include text indicating "automatically generated."

In an example, the journal may be written by using user information. For example, the user information may include at least one of text information (e.g., the text information 110, 130, 140, and 150) stored in the electronic device 10, image information (e.g., the image information 120), voice information, activity information, biometric information, or location information.

The journal may be written in a format corresponding to a specific format. For example, the journal may be configured in a format including a category and a component. For example, the category may correspond to a topic of the journal. For example, the component may correspond to a structure of the journal. For example, a format of a user-written journal illustrated in FIG. 1 may include a category "exercise." For example, the format of the user-written journal illustrated in FIG. 1 may include components corresponding to the image information 120 and the text information 110, 130, 140, and 150. For example, components of the format of the user-written journal of FIG. 1 may include "date" (e.g., corresponding to the text information 110), "exercise photo" (e.g., corresponding to the image information 120), "text content" (e.g., corresponding to the text information 130), "exercise routine" (e.g., corresponding to the text information 140), and "exercise place" (e.g., corresponding to the text information 150).

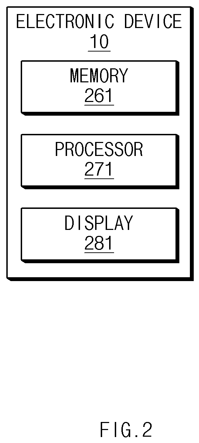

FIG. 2 is a block diagram illustrating a configuration of the electronic device according to an embodiment.

Referring to FIG. 2, the electronic device 10 may include at least one of a memory 261, a processor 271, or a display 281.

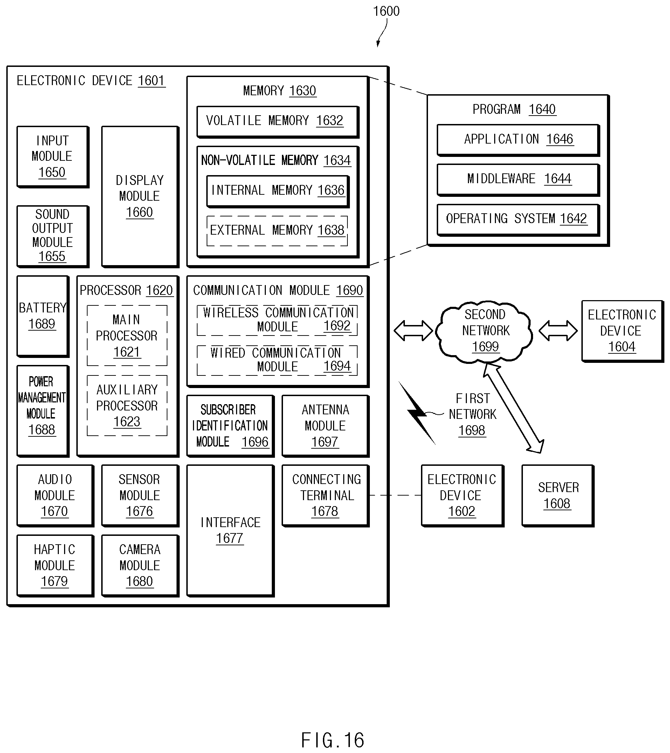

According to an embodiment, the memory 261 may include an internal memory or an external memory. The internal memory may include, for example, at least one of a volatile memory (e.g., a dynamic random access memory (DRAM), a static random access memory (SRAM), or a synchronous dynamic random access memory (SDRAM)) or a non-volatile memory (e.g., a programmable read-only memory (PROM), a one time programmable read-only memory (OTPROM), an erasable programmable read-only memory (EPROM), an electrically erasable programmable read-only memory (EEPROM), a mask read-only memory (mask ROM), a flash read-only memory (flash ROM), a flash memory, a hard drive, or a solid state drive (SSD)). The external memory may include at least one of a flash drive (e.g., a compact flash), a secure digital (SD), a micro secure digital (micro-SD), a mini secure digital (mini-SD), an extreme digital (xD), a multi-media card (MMC), or a memory stick. The memory 261 may be referenced by the memory 1630 to be described herein with reference to FIG. 16.

According to an embodiment, the memory 261 may store instructions executable by the processor 271. The memory 261 may store at least one piece of data related to an operation of the electronic device 10 or may store a command related to a functional operation of components of the electronic device 10. For example, the memory 261 may store a user input. For example, the user input may include at least one of a voice input received through a microphone or a touch input through the display 281. The memory 261 may store at least one application mounted in a preloaded form at a time of manufacture of the electronic device 10 or downloaded in a third party form from an online market (e.g., an application store (app store)). For example, the at least one application may include a voice recognition application supporting an operation of a voice recognition service.

According to an embodiment, the display 281 may output various screens. For example, the processor 271 may output various screens (e.g., a main interface screen, a home screen, a system setting screen, or an application execution screen) using the display 281. For example, the processor 271 may provide, to a user through the display 281, a journal written by the user or a journal automatically generated.

According to an embodiment, a journal may be configured in a format including a category and a component. That is, a format may include a category and a component, and the journal may be written in a specific format. For example, the category may correspond to food, exercise, travel, finance, or the like. For example, when the category is food, the component may include a photo of food, calories, a food name, a price, a restaurant location, or the like.

According to an embodiment, the display 281 may be implemented as a touchscreen display including a display panel, a cover glass, and a touch panel (or a touch sensor). The display panel may receive a driving signal corresponding to image information at a specified frame rate and may output a related screen based on the driving signal. The cover glass may be disposed over the display panel and may transmit light resulting from screen output of the display panel. The display 281 may be referenced by a display module 1660 to be described herein with reference to FIG. 16.

According to an embodiment, the processor 271 may be connected to the memory 261 and the display 281. For example, the processor 271 may be electrically connected to components of the electronic device 10. For example, the processor 271 may be connected to the components of the electronic device 10 wired or wirelessly. The processor 271 may be constituted by a single chip or a plurality of chips. The processor 271 may include at least one processing circuit. The processor 271 may perform operations necessary for an operation of the electronic device 10. The processor 271 may control the components of the electronic device 10. The processor 271 may be referenced by the processor 1620 to be described herein with reference to FIG. 16.

In the present disclosure, an operation of the electronic device 10 may be referred to as being performed by the processor 271. The processor 271 may include at least one electrical circuit executing instructions of software and may perform various data processing and calculations to be described herein using the at least one electrical circuit.

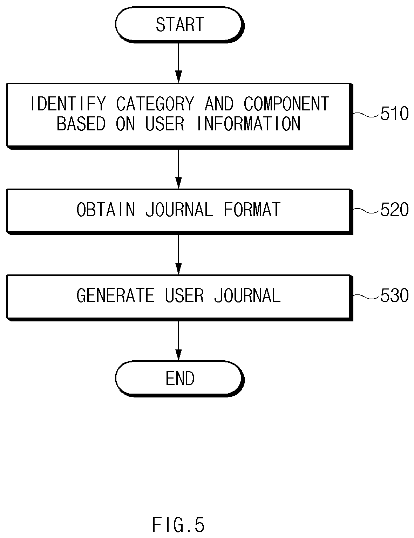

According to an embodiment, the processor 271 may determine a journal category and at least one journal component for generating a user journal. For example, the user journal may include a journal automatically generated for a user of the electronic device 10. In an example, the processor 271 may determine, based on user information stored in the memory 261, a journal category and at least one journal component for generating the user journal. For example, the user information may include at least one of text information, image information, voice information, activity information, biometric information, or location information stored in the memory 261. For example, the text information may include at least one of message information exchanged between the user and another user or information recorded in a note written by the user. The journal category and the at least one journal component may be described herein with reference to FIG. 5 to FIG. 7.

According to an embodiment, the processor 271 may obtain a user journal format, which is a journal format for generating the user journal. In an example, the processor 271 may obtain the user journal format based on the determined journal category and at least one journal component. For example, the processor 271 may generate a journal format including the journal category and the at least one journal component. The processor 271 may provide the generated journal format to the user through the display 281.

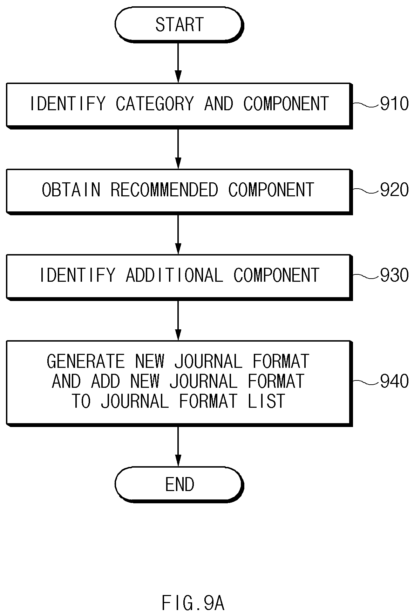

According to an embodiment, the processor 271 may generate a new user journal format from the journal format based on a user input. For example, the user may modify the journal format generated by the processor 271. For example, the user may modify the at least one journal component included in the journal format. The processor 271 may add the user journal format, which is the modified journal format, to a journal format list. For example, the journal format list may include at least one user journal format. The journal format including the user journal format may be described herein with reference to FIG. 9a to FIG. 9b.

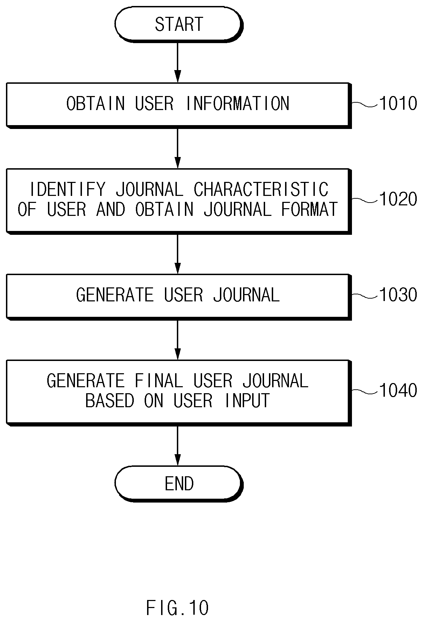

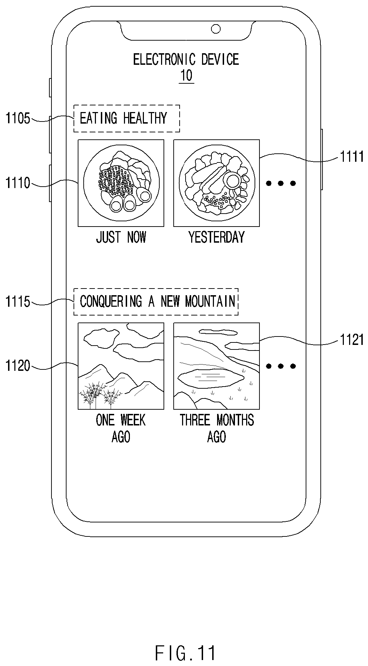

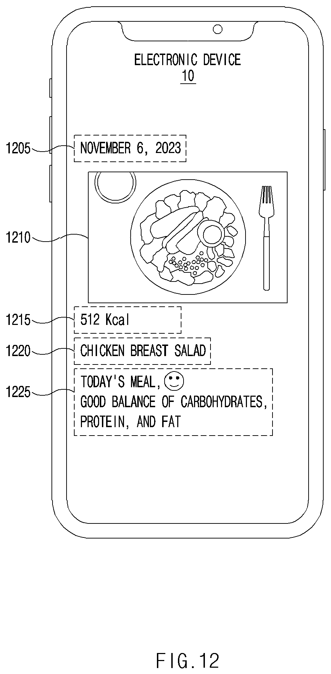

According to an embodiment, the processor 271 may generate the user journal based on the user journal format. In an example, the processor 271 may generate the journal in a format corresponding to the obtained user journal format. For example, the user journal format may include one journal category. For example, the user journal format may include at least one journal component. The processor 271 may provide the generated user journal to the user through the display 281. The processor 271 may modify the user journal based on a user input. The processor 271 may add the modified user journal to a user journal list. An operation of generating the user journal may be referred to with reference to FIG. 10. An example of the user journal list may be referred to with reference to FIG. 11. An example of the user journal may be referred to with reference to FIG. 12.

According to an embodiment, the processor 271 may identify a category of the user information from the user information. The identified category may correspond to the journal category described herein. For example, the category may include a topic of a journal to be generated. For example, when the user information is image information regarding a photo of food, the processor 271 may identify the category as food. For example, when the user information is image information regarding an exercise photo or text information regarding an exercise routine, the processor 271 may identify the category as exercise. For example, when the user information is image information regarding a travel photo, the processor 271 may identify the category as travel.

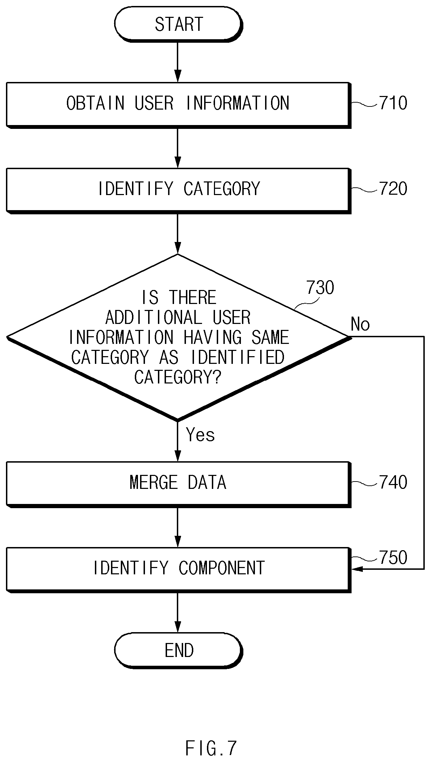

According to an embodiment, the processor 271 may search for additional user information associated with the identified category. In an example, the processor 271 may search for additional user information having the same category as the identified category. The additional user information may include information stored in the memory 261. For example, when the category identified from image information regarding the photo of food is food, the processor 271 may search for other user information having the food category. For example, when information on the location of a restaurant corresponding to the photo of food is stored in the memory 261, the processor 271 may search for new additional user information, which is the information on the location of the restaurant. For another example, when a restaurant name corresponding to the photo of food is stored in the memory 261, the processor 271 may search for text information regarding the restaurant name as new additional user information. The additional user information may be further described herein with reference to FIG. 7.

According to an embodiment, the processor 271 may identify at least one component by using user information including the retrieved additional user information. For example, the components may constitute a structure of a journal to be generated. For example, when the user information including the additional user information is the image information described herein regarding the photo of food, information on the location of the restaurant, and text information regarding the restaurant name, the components may correspond to "photo of food," "restaurant location information," and "restaurant name." The at least one journal component described herein may include the identified at least one component.

According to an embodiment, the processor 271 may determine whether the journal format including the journal category and the at least one journal component is included in the journal format list stored in the memory 261. For example, the journal format list may include at least one user journal format generated to write the user journal. For example, each journal format may include one category and at least one component.

According to an embodiment, the processor 271 may obtain a user journal format including the journal format based on a determination that the journal format is included in the journal format list. For example, the obtained user journal format may include the journal category and the at least one journal component. In an example, when the journal format including the journal category and the at least one journal component is included in the journal format list, the processor 271 may use the included journal format as the user journal format. That is, the processor 271 may generate the user journal in the included journal format.

According to an embodiment, based on a determination that a journal format including the journal category and the at least one journal component is not included in the journal format list, the processor 271 may further identify at least one additional component from the journal category and the identified at least one component. In this case, the processor 271 may use a vector database. A method of identifying the additional component by using the vector database may be described herein with reference to FIG. 7.

According to an embodiment, the processor 271 may generate a new recommended journal format including the journal category, the identified at least one component, and the additionally identified at least one additional component. In this case, the at least one journal component may include at least one component and at least one additional component. The processor 271 may generate the user journal in the recommended journal format.

According to an embodiment, the processor 271 may provide information regarding the recommended journal format to the user. In an example, the processor 271 may provide the information regarding the recommended journal format to the user through the display 281. The user may check the journal category and the at least one journal component included in the recommended journal format.

According to an embodiment, the processor 271 may identify at least one final component of the recommended journal format based on a user input (e.g., a touch input or a voice input). In an example, the processor 271 may receive the user input and obtain at least one modified journal component of the recommended journal format. The at least one modified journal component may correspond to the at least one final component.

According to an embodiment, the processor 271 may generate a final journal format including the at least one final component, which is the at least one journal component modified based on the user input, and the journal category. For example, the final journal format may include a component modified by the user input, as compared to the recommended journal format. The processor 271 may generate the user journal by using the generated final journal format. The processor 271 may add the generated final journal format to the journal format list.

According to an embodiment, the processor 271 may generate the user journal in a format corresponding to the user journal format or the final journal format. In an example, the processor 271 may generate the user journal in a format corresponding to the user journal format or the final journal format by using at least one of the user information, the additional user information, or information obtained from an external server. For example, the external server may be a server operated by a third party. The external server may include a server interoperating with an application stored in the electronic device 10. For example, the processor 271 may obtain exercise information (e.g., an exercise routine, an exercise record, or the like) from a server interoperating with a health application. The processor 271 may communicate with the external server through a communication circuit included in the electronic device 10 and may obtain information.

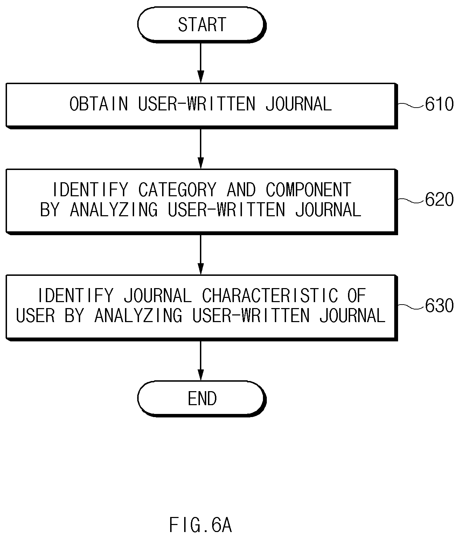

According to an embodiment, the processor 271 may identify a journal characteristic of the user based on at least one of the user information or the additional user information. For example, the journal characteristic of the user may include at least one of a language habit, an intent, a word frequency, or a sentiment of the user. In an example, the processor 271 may generate the user journal by reflecting the identified journal characteristic of the user. A method of identifying the journal characteristic of the user may be described herein with reference to FIG. 6a to FIG. 6b.

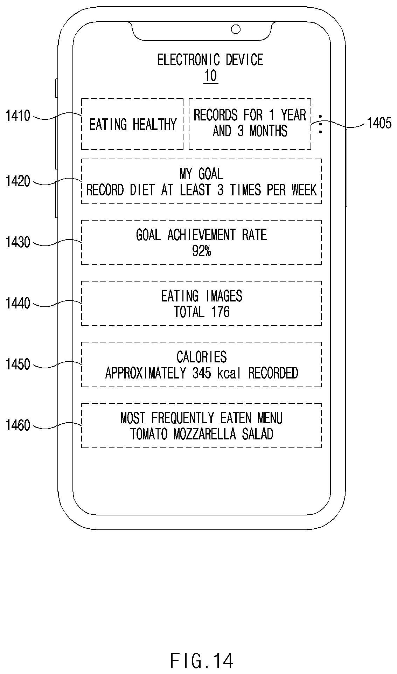

According to an embodiment, during a specified period of time, the processor 271 may generate a report based on at least one of the generated user journal or the journal directly written by the user. For example, the report may be generated at each period specified by the user. For example, the report may be a summary obtained by integrating the generated user journal or the journal directly written by the user during the specified period of time. The report may be shared with another user. For example, the processor 271 may transmit and receive information regarding the report to and from an external electronic device. The report may be further described herein with reference to FIG. 14.

Each of the components of the electronic device 10 described herein may include a single entity or multiple entities, and some of the multiple entities may be disposed separately from other components. In an embodiment, one or more of the components described herein may be omitted, or one or more other components may be added.

FIG. 3 is a block diagram of modules of the electronic device according to an embodiment.

Referring to FIG. 2 and FIG. 3, the electronic device 10 may include at least one of a user information analysis module 310, a format generation module 320, a journal generation module 330, or a report generation module 340. The modules illustrated in FIG. 3 may be, for example, software modules implemented by executing instructions stored in the memory 261 of the electronic device 10. At least a portion of the modules illustrated in FIG. 3 may be hardware modules implemented by dedicated hardware of the electronic device 10.

According to an embodiment, the user information analysis module 310 may include a user-written journal analysis module 311 and/or a user activity analysis module 313. For example, user information may include all user-related information stored in the electronic device 10. For example, the user information may include journal information directly written by the user and/or user activity information.

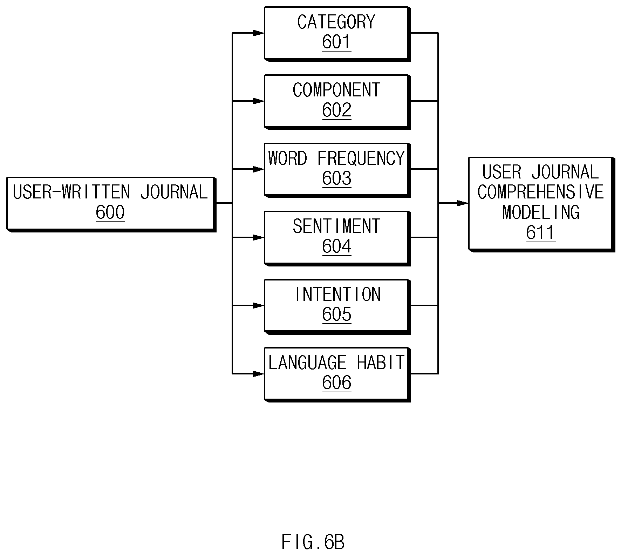

According to an embodiment, the user-written journal analysis module 311 may analyze a journal directly written by the user and identify a category and a component of a format of the journal written by the user. In addition, the user-written journal analysis module 311 may analyze the journal directly written by the user and identify a journal characteristic of the user. A detailed operation of the user-written journal analysis module 311 may be described herein with reference to FIG. 6a or FIG. 6b.

According to an embodiment, the user activity analysis module 313 may identify, based on activity information about the user obtained by the electronic device 10, a category and a component of a journal format for generating a new journal. For example, the activity information about the user may refer to various forms of user-related information such as text information, image information, activity information, biometric information, or location information. A detailed operation of the user activity analysis module 313 may be described herein with reference to FIG. 7.

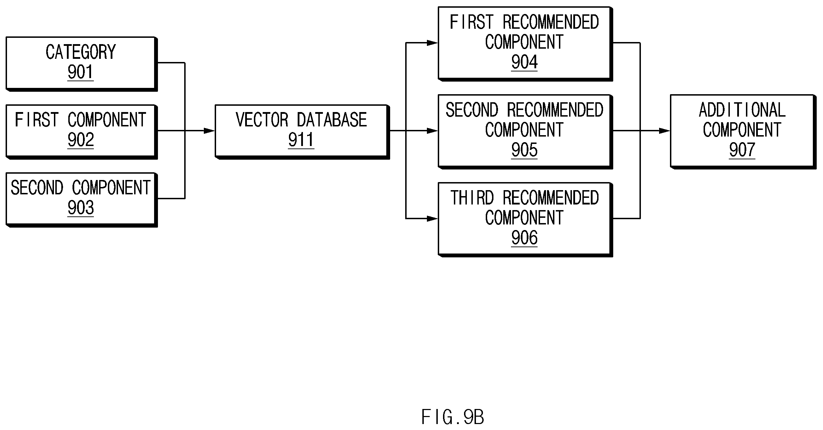

According to an embodiment, the format generation module 320 may generate a journal format necessary when a journal is to be automatically generated based on the user information. For example, the format generation module 320 may generate a journal format including the category and the component identified by the user information analysis module 310. The format generation module 320 may add the generated journal format to the journal format list. A detailed operation of the format generation module 320 may be described herein with reference to FIG. 9a or FIG. 9b.

According to an embodiment, the journal generation module 330 may generate, based on the journal format and a language habit of the user, a user journal using user activity information. For example, the journal generation module 330 may generate the user journal in a form of a journal format including the category and the component identified by the user activity analysis module 313. In this case, the journal generation module 330 may generate the journal by reflecting the language habit of the user learned by the user-written journal analysis module 311. The journal generation module 330 may add the generated user journal to a journal list. For example, the journal list may include a journal generated by the journal generation module 330 and/or a journal directly written by a user. A detailed operation of the journal generation module 330 may be described herein with reference to FIG. 10.

According to an embodiment, the report generation module 340 may generate a report based on journals added to the journal list during a specified period of time. For example, the report generation module 340 may generate a report providing comprehensive contents of journals by integrating user journals generated for one week. The report generation module 340 may generate a report integrating journals based on the same category and/or different categories. The report generated by the report generation module 340 may be described herein with reference to FIG. 14.

In an embodiment, one or more of the modules or operations of the electronic device 10 described herein may be omitted, or one or more other modules or operations may be added.

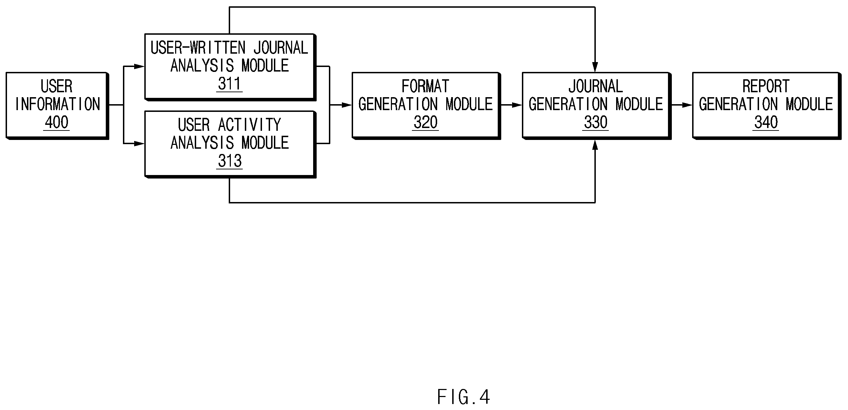

FIG. 4 is a flow diagram illustrating generation of a user journal and/or a report using user information by the electronic device, according to an embodiment.

Referring to FIG. 3 and FIG. 4, the electronic device 10 according to an embodiment may obtain user information 400. For example, the user information 400 may be referred to by the user information described above with reference to FIG. 1 or FIG. 2. For example, the user information 400 may include a journal written by a user and/or user activity information. The user activity information is as described above with reference to FIG. 3.

According to an embodiment, the electronic device 10 may identify at least one of a category, a component, or a journal characteristic of the user for format generation from the user information 400 (e.g., user-written journal information) using the user-written journal analysis module 311. For example, the category may correspond to a topic of the journal. For example, the component may correspond to a structure of the journal. In an example, the category and the component are as described herein with reference to FIG. 1. For example, the journal characteristic of the user may include at least one of a language habit, an intent, a word frequency, or a sentiment of the user. A method in which the user-written journal analysis module 311 identifies at least one of the category, the component, or the journal characteristic of the user from the journal written by the user may be referred to with reference to FIG. 6a or FIG. 6b.

According to an embodiment, the electronic device 10 may identify the category and/or the component from the user information 400 (e.g., the user activity information) using the user activity analysis module 313. A method in which the user activity analysis module 313 identifies the category and/or the component from the user information 400 (e.g., the user activity information) may be referred to with reference to FIG. 7.

According to an embodiment, the electronic device 10 may determine whether a journal format corresponding to a format including the identified category and/or component is included in the journal format list. Based on a determination that the journal format is not included in the journal format list, the electronic device 10 may generate a new journal format using the format generation module 320. Based on a determination that the journal format is included in the journal format list, the electronic device 10 may generate a user journal in a format corresponding to the journal format using the journal generation module 330.

According to an embodiment, the electronic device 10 may generate a journal format based on the category and/or component identified using the format generation module 320. For example, the generated journal format may correspond to a format including the identified category and/or component. The generated journal format may be changed based on a user input (e.g., a touch input or a voice input). For example, the category and/or the component of the generated journal format may be modified by the user input. The electronic device 10 may add the generated journal format to the journal format list. A method in which the format generation module 320 generates a new journal format based on the category and the component may be referred to with reference to FIG. 9a or FIG. 9b.

According to an embodiment, the electronic device 10 may generate the user journal in a format corresponding to the category and/or component identified using the journal generation module 330. In an example, the journal generation module 330 may generate the user journal using the user information 400 (e.g., the user activity information). For example, generation of the user journal may be performed based on execution of a specific application of the electronic device 10. The format of the generated user journal may correspond to the category and/or component identified from the user information 400. The journal generation module 330 may generate the user journal based on the journal characteristic of the user identified from the user information 400 (e.g., the user-written journal information). For example, the journal generation module 330 may learn at least one of a word frequently used by the user, an intent, a sentiment, or a language habit of the user to express it in text information in the user journal. The electronic device 10 may provide the generated user journal to the user. The generated user journal may be modified based on a user input. An operation related to generation of the user journal may be referred to with reference to FIG. 10.

According to an embodiment, the electronic device 10 may generate the report using the report generation module 340. For example, the report may correspond to a merged report of journals generated by the journal generation module 330 or journals directly written by the user during a specified period of time. The report and/or operations regarding report generation may be referred by FIG. 14.

FIG. 5 is a flowchart illustrating journal generation operations of the electronic device according to an embodiment.

Referring to FIG. 3 and FIG. 5, in operation 510, the electronic device 10 may identify a category and a component based on user information. For example, the user information is as described herein with reference to FIG. 1 or FIG. 2. A method in which the electronic device 10 identifies the category and the component based on the user information may be referenced by operations to be described herein with reference to FIG. 6a to FIG. 7.

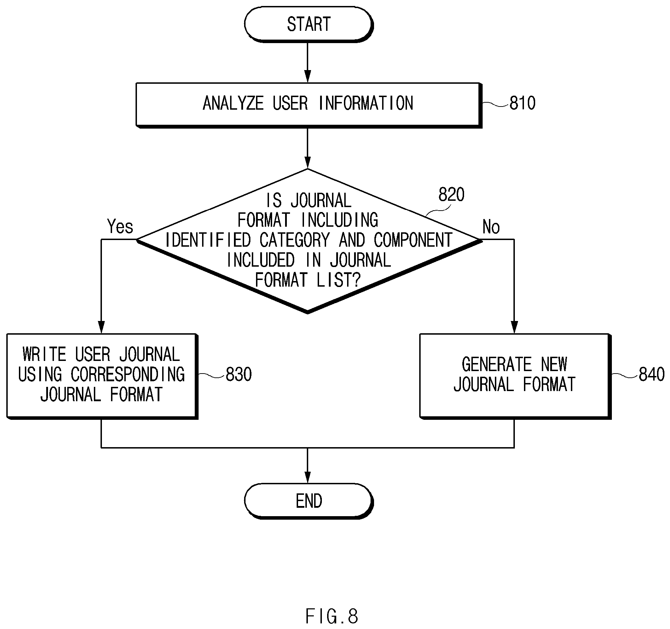

In operation 520, the electronic device 10 may obtain a journal format based on the identified category and component. For example, the journal format may correspond to a format including the identified category and at least one component. For example, the journal format is as described herein with reference to FIG. 1 or FIG. 2. A method in which the electronic device 10 obtains the journal format based on the identified category and component may be referenced by operations to be described herein with reference to FIG. 8 to FIG. 9b.

In operation 530, the electronic device 10 may generate a user journal in a format corresponding to the obtained journal format. In an example, the electronic device 10 may generate the user journal using the journal generation module 330. A method in which the user journal is generated using the journal generation module 330 may be referred to with reference to FIG. 10.

FIG. 6a is a flowchart illustrating operations for the user-written journal analysis module according to an embodiment.

Referring to FIG. 1 to FIG. 4 and FIG. 6a, the electronic device 10 may identify a category and a component from a journal written by the user using the user-written journal analysis module 311. In addition, the electronic device 10 may learn a language habit of the user using the user-written journal analysis module 311.

In operation 610, the electronic device 10 may obtain, from the user, a journal written by the user. For example, the user may write the journal using a journal application. The user may write the journal using a photo, text, a video, a voice recording, GPS information, or the like. The journal written by the user may be referred to by the journal illustrated in FIG. 1.

In operation 620, the electronic device 10 may identify, by using the user-written journal analysis module 311, a category and a component of a format of the journal written by the user. In an example, the user-written journal analysis module 311 may analyze the journal written by the user using a model based on an artificial neural network. For example, a different artificial intelligence model may be used by the user-written journal analysis module 311 depending on a data type of user information. For example, when the user information is text information, the user-written journal analysis module 311 may use a topic modeling technology and/or a named-entity recognition technology. For example, when the user information is image information, the user-written journal analysis module 311 may use an image classification technology and/or an object detection technology.

According to an embodiment, the user-written journal analysis module 311 may identify a category of the journal from the journal written by the user using a topic modeling technology and/or the image classification technology. For example, the user-written journal analysis module 311 may identify a component of the journal from the journal written by the user using the named-entity recognition technology and/or the object detection technology. For example, when the user writes a journal as illustrated in FIG. 1 after exercising, as described herein with reference to FIG. 1, the user-written journal analysis module 311 may identify a category (e.g., "exercise") and components (e.g., "date," "exercise photo," "text content," "exercise routine," and "exercise place").

In operation 630, the electronic device 10 may identify a journal characteristic of the user from the journal written by the user using the user-written journal analysis module 311. For example, the journal characteristic of the user may include at least one of a word frequency, a sentiment, an intent, or a language habit of the user. In an example, the user-written journal analysis module 311 may analyze the journal written by the user using a model based on an artificial neural network. For example, the user-written journal analysis module 311 may identify the journal characteristic of the user using a sentiment analysis technology, a frequency analysis technology, and/or an intent analysis technology. For example, the user-written journal analysis module 311 may learn the language habit of the user based on machine learning. The order of the operations illustrated in FIG. 6a is not limited to the illustrated order. For example, the user-written journal analysis module 311 may identify the category and the component after identifying the journal characteristic of the user, or may simultaneously identify the category and the component.

FIG. 6b is a block diagram illustrating an operational structure of the user-written journal analysis module according to an embodiment.

Referring to FIG. 6a and FIG. 6b, the user-written journal analysis module 311 may perform user journal comprehensive modeling 611 from a user-written journal 600 written by the user from the user-written journal 600. In an embodiment, the user-written journal analysis module 311 may identify at least one of a category 601, a component 602, or a journal characteristic of the user (e.g., a word frequency 603, a sentiment 604, an intent 605, or a language habit 606) from the user-written journal 600 using a model based on an artificial neural network. The user-written journal analysis module 311 may perform the user journal comprehensive modeling 611 by organizing the category 601, the component 602, and/or the journal characteristic of the user identified from the user-written journal 600 into a database.

According to an embodiment, the electronic device 10 may perform the user journal comprehensive modeling 611 and may store the user journal comprehensive modeling 611 in the memory 261. In an example, the electronic device 10 may identify the category 601 and the component 602 in the user journal comprehensive modeling and obtain a format of the journal. For example, the electronic device 10 may identify the journal characteristic of the user (e.g., the word frequency 603, the sentiment 604, the intent 605, or the language habit 606) from the user journal comprehensive modeling and may use the journal characteristic of the user for generation of a user journal.

FIG. 7 is a flowchart illustrating operations for identifying a category and a component from user information by the electronic device according to an embodiment.

Referring to FIG. 2, FIG. 3, and FIG. 7, in operation 710, the user activity analysis module 313 may obtain user information (e.g., the user activity information described herein with reference to FIG. 3). The user information may include newly obtained user information. For example, new user information may refer to user information newly added to the electronic device 10. For example, when the user takes a photo of food using the electronic device 10, the photo of food may be added to the electronic device 10 as new user information. In this case, information on a location in which the photo of food is taken may also be stored in the electronic device 10 together with the photo of food. For another example, the user may turn on an exercise application of the electronic device 10 to perform aerobic exercise such as running, or may record a today's exercise routine in the exercise application. In this case, an exercise record or location information about an exercise place may be newly stored in the electronic device 10.

In operation 720, the user activity analysis module 313 may identify a category from the user information. In an example, a method in which the user activity analysis module 313 identifies the category from additional user information may be referred to by the method of identifying the category described herein with reference to FIG. 6a. For example, in the example described herein with reference to operation 710, when the photo of food is newly added, the user activity analysis module 313 may identify a category "food" from the photo of food using the image classification technology. For example, when an exercise record or an exercise-related photo is added, the user activity analysis module 313 may identify a category "exercise" from the exercise record or the exercise-related photo using the topic modeling technology or the image classification technology.

In operation 730, the user activity analysis module 313 may search for additional user information having the same category as the identified category. For example, the additional user information may include user information stored in the electronic device 10 (e.g., text information, image information, voice information, activity information, biometric information, or location information). In an example, when there is additional user information different from the information obtained in operation 710, the user activity analysis module 313 may determine whether a category identified from the additional user information is the same category as the category identified in operation 720. In an example, a method in which the user activity analysis module 313 identifies the category from the additional user information may be referred to by the method of identifying the category described herein with reference to FIG. 6a.

For example, when the user records text content while taking a photo of food using the electronic device 10, image information about the photo of food and text information about the text content may be stored in the electronic device 10. In addition, location information about the place where the photo of food is taken may also be stored in the electronic device 10. In this case, when the category "food" is identified from the image information about the photo of food in operation 710, the user activity analysis module 313 may determine whether the text information and/or the location information, which are different additional user information, have the category "food."

For another example, when the user activity analysis module 313 obtains information about the user's exercise record, the electronic device 10 may also obtain location information about an exercise place in which the user has exercised, a photo taken during exercise, and/or information regarding an exercise routine. In this case, when the category "exercise" is identified from the information about the exercise record in operation 710, the user activity analysis module 313 may determine whether the location information, an exercise photo, and/or the information regarding an exercise routine, which are different additional user information, have the category "exercise."

When additional user information having the same category as the identified category is retrieved (e.g., YES in operation 730), in operation 740, the user activity analysis module 313 may merge the user information and the additional user information. For example, the user activity analysis module 313 may merge the user information and the additional user information having the same category into one piece of data, thereby identifying a plurality of components based on one category. In an example, when the retrieved additional user information is information stored in the electronic device 10 within a specified time range from a time at which the user information obtained in operation 710 is obtained, the user activity analysis module 313 may merge the retrieved additional user information and the user information. For example, even when the retrieved additional user information has the same category as the category identified in operation 720, the user activity analysis module 313 may merge the user information and the additional user information when a difference between stored times in the electronic device 10 is within a specified time range.

According to an embodiment, in operation 750, the user activity analysis module 313 may identify a component from the merged user information and additional user information. By merging the user information and the additional user information, the electronic device 10 may prevent duplicate results from being generated from user information of the same category stored in the electronic device 10 within the specified time range.

A method in which the user activity analysis module 313 identifies the component may be referred to by the method of identifying the component described herein with reference to FIG. 6a. In an example, the user activity analysis module 313 may identify the component from text information using the named-entity recognition technology. In an example, the user activity analysis module 313 may identify the component from image information using the object detection technology. For example, when image information corresponding to the photo of food and text information and location information, which are the additional user information, are merged, the user activity analysis module 313 may identify components "photo of food," "text content," and "place" using the named-entity recognition technology and/or the object detection technology. For example, when text information about the exercise record, location information indicating the exercise place, the image information indicating the exercise photo, and text information indicating the exercise routine are merged, the user activity analysis module 313 may identify components "exercise record," "exercise place," "exercise photo," and "exercise routine" from the above information using the named-entity recognition technology and/or the object detection technology.

When additional user information having the same category as the identified category is not retrieved (e.g., NO in operation 730), in operation 750, the user activity analysis module 313 may identify a component from the user information identified in operation 710. For example, when the user information is image information regarding the photo of food, the user activity analysis module 313 may identify the component "photo of food." For example, when the user information is information regarding the exercise record or image information indicating the exercise photo, the user activity analysis module 313 may identify a component "exercise record" or "exercise photo."

FIG. 8 is a flowchart for determining journal generation or format generation based on an identified category and component by the electronic device according to an embodiment.

Referring to FIG. 8, in operation 810, the electronic device 10 may analyze user information and identify a category and at least one at least one component. For example, an operation performed in operation 810 may be referenced by the operation performed in FIG. 6a to FIG. 7.

In operation 820, the electronic device 10 may determine whether a journal format including the identified category and component is included in a journal format list. For example, among formats included in the journal format list, it may be determined whether there is a format that has a component that is the same as the identified at least one component based on the same category as the identified category.

When a format that is the same as the journal format including the identified category and component is included in the journal format list (e.g., YES in operation 820), in operation 830, the electronic device 10 may write a user journal using the included journal format. In an example, when there is a format having the same category as the identified category in the journal format list and components of the format include the identified component, the electronic device 10 may determine that a format that is the same as the journal format is included in the journal format list. For example, in the case in which the identified category is "food" and the components are "photo of food" and "restaurant location," when, among formats included in the journal format list, there is a format whose category is "food" and whose components include "photo of food" and "restaurant location," the electronic device 10 may determine that a format that is the same as the journal format is included in the journal format list.

When a format that is the same as a journal format including the identified category and component is not included in the journal format list (e.g., NO in operation 820), in operation 840, the electronic device 10 may generate the journal format using the format generation module 320. In an example, when there is no format having the same category as the identified category in the journal format list, or even if there is a format having the same category, when at least one of the identified components is not included, the electronic device 10 may determine that a format that is the same as the journal format is not included in the journal format list.

For example, in the case in which the identified category is "food" and the components are "photo of food" and "restaurant location," when, among formats included in the journal format list, there is no format having the category "food," the electronic device 10 may determine that a format that is the same as the journal format is not included in the journal format list.

For example, in the case in which the identified category is "food" and the components are "photo of food" and "restaurant location," even when, among formats included in the journal format list, there is a format having the category "food," when the components of the format do not include either one of "photo of food" and "restaurant location," the electronic device 10 may determine that a format that is the same as the journal format is not included in the journal format list. In this case, using the format generation module 320, the electronic device 10 may generate a journal format having the category "food" and including "photo of food" and "restaurant location" as components. Detailed operations of the format generation module 320 may be described herein with reference to FIG. 9a or FIG. 9b.

FIG. 9a is a flowchart illustrating operations for generating a new format by the electronic device according to an embodiment.

Referring to FIG. 9a, in operation 910, the electronic device 10 may identify a category and at least one component of a new journal format for generating a journal using the format generation module 320. Operation 910 may be referenced by operation 810.

In operation 920, the format generation module 320 may obtain recommended components based on the identified category and at least one component. According to an embodiment, the format generation module 320 may obtain at least one recommended component from the identified category and at least one component using a vector database. For example, the vector database may correspond to a database built based on a plurality of user journals in which categories and components are labeled. For example, the electronic device 10 may convert data corresponding to the plurality of user journals into vectors using a text embedding technology. The vector database may correspond to a set of a plurality of pieces of user journal data converted into vectors. For example, each vector may correspond to a representation indicating a category or a component. For example, the vector database may include vector similarity based on a distance between vectors between categories and/or components. For example, the vector similarity may include similarity obtained by using a Euclidean distance, a cosine similarity, and/or a Jaccard similarity.

According to an embodiment, using the vector database, the format generation module 320 may obtain, from the category and the at least one component, at least one recommended component having similarity greater than or equal to a specified value. For example, the format generation module 320 may retrieve the identified category and at least one component in the vector database. The format generation module 320 may obtain, based on the distance between vectors, at least one recommended component corresponding to the component among vectors within a specified distance.

For example, when the identified category is "food" and the components are "photo of food" and "restaurant location," the format generation module 320 may obtain new recommended components such as a "review score," "operating time," and a "food price" of the restaurant. In this case, the format generation module 320 may identify an additional component satisfying a specified condition. For example, the format generation module 320 may identify an additional component having the highest similarity among the recommended components. For example, a component corresponding to a vector having similarity greater than or equal to the specified value may be identified as the additional component.

Using the format generation module 320, the electronic device 10 may provide the at least one determined recommended component to the user. The format generation module 320 may identify the additional component based on a user input (e.g., a touch input or a voice input). For example, the additional component may be one in which at least a portion of the recommended component provided to the user is modified, deleted, or added. For example, when the user does not want to include the newly recommended component in the journal format using the vector database, the user may delete the newly recommended component.

In operation 940, the format generation module 320 may generate a new journal format including the identified additional component. For example, the new journal format may have the category identified in operation 910 and may include the component identified in operation 910 and the additional component identified in operation 930. The electronic device 10 may add the generated new journal format to the journal format list. When a category and a component identified thereafter from the user information are the same as the category and the component of the generated new journal format, the electronic device 10 may generate a user journal using the journal format.

FIG. 9b is an exemplary view of a method of operation of the format generation module according to an embodiment.

Referring to FIG. 9b, the format generation module 320 may obtain at least one recommended component from a category 901, a first component 902, and a second component 903. In an embodiment, by retrieving the category 901, the first component 902, and the second component 903 in a vector database 911, the format generation module 320 may obtain at least one recommended component (e.g., a first recommended component 904, a second recommended component 905, or a third recommended component 906) based on similarity between vector distances. A method in which the recommended component is obtained may be referred to with reference to FIG. 9a. The format generation module 320 may identify an additional component 907 based on the recommended components (e.g., the first recommended component 904, the second recommended component 905, or the third recommended component 906). For example, the format generation module 320 may identify a component corresponding to a vector having the highest similarity as the additional component 907.

FIG. 10 is a flowchart illustrating operations for generating a user journal by the electronic device according to an embodiment.

Referring to FIG. 10, in operation 1010, the electronic device 10 may obtain user information. For example, the user information may include additional user information. For example, operation 1010 may be referenced by the operation performed in operation 710 of FIG. 7.

In operation 1020, the electronic device 10 may identify a journal characteristic of the user and may obtain a journal format for generating a user journal. A method in which the journal characteristic of the user is obtained by identifying the journal characteristic of the user from the user information (e.g., a user-written journal) may be referred to with reference to FIG. 6a and FIG. 6b. Operations for obtaining the journal format for generating the user journal may be referenced by the operations performed in FIG. 7 to FIG. 9b.

In operation 1030, the electronic device 10 may generate the user journal. In an example, the electronic device 10 may generate the user journal using the journal generation module 330. For example, the journal generation module 330 may generate the user journal by fine-tuning a large language model (LLM) with journal data. The journal generation module 330 may write the user journal in a format corresponding to the journal format using the user information. In this case, when components of the journal format include a natural language input item such as "text content," based on the journal characteristic of the user (e.g., the word frequency 603, the sentiment 604, the intent 605, or the language habit 606 of FIG. 6b), "text content" (e.g., text information 1225 in FIG. 12) may be generated.

According to an embodiment, the journal generation module 330 may obtain information from an external server and write the user journal. For example, when there is no information corresponding to the additional component identified in FIG. 9a or FIG. 9b in the electronic device 10, the journal generation module 330 may obtain information corresponding to the additional component from the external server. For example, when the additional component is "calories of food," the journal generation module 330 may search for the calories of the food in the external server (e.g., a portal site).

In operation 1040, the electronic device 10 may generate a final user journal based on a user input (e.g., a touch input or a voice input). For example, the generated journal may be added to the journal list after verification by the user. In an embodiment, the electronic device 10 may provide, to the user, the user journal generated by the journal generation module 330. For example, the final user journal may be one in which at least a portion of the user journal provided to the user is modified, deleted, or added. For example, the final user journal may be one in which a portion of text content of the generated user journal is modified, or the user information (e.g., text information or image information) is modified. For example, the user may add text or an emoji in a form expressing an emotion to the journal generated by the journal generation module 330. The electronic device 10 may add the generated final user journal to the journal list. For example, the journal list may include the journal directly written by the user and/or the user journal generated by the journal generation module 330. According to an embodiment, the user may automatically record a journal for a category of interest by the journal generation module 330.

FIG. 11 is an exemplary view of a user interface (UI) of a journal list provided in the electronic device according to an embodiment.

Referring to FIG. 11, the electronic device 10 may provide a journal list as a UI through the display 281 of FIG. 2. In an example, the journal list may be classified by topics. For example, journals included in the journal list may include a journal directly written by the user and/or a journal generated by the journal generation module 330 of FIG. 3. For example, the electronic device 10 may provide each topic (e.g., Topic 1 1105 and Topic 2 1115) and thumbnails (e.g., Thumbnail 1 1110, Thumbnail 2 1111, Thumbnail 3 1120, and Thumbnail 4 1121) of journals written for the topic. Each thumbnail may be provided in an order of most recently written along with a written date.

FIG. 12 is an exemplary view of a user journal provided in the electronic device according to an embodiment.

Referring to FIG. 12, the exemplary view of the journal illustrated in FIG. 12 is an example of a journal corresponding to Thumbnail 2 1111 of FIG. 11. The journal of Thumbnail 2 1111 may be based on a category "food" and may include a plurality of components such as "date," "photo of food," "calories," "food name," and "text content." Among the components, "date" may include date information 1205 such as "November 6, 2023," "photo of food" may include food image information 1210, "calories" may include food calorie information 1215 such as 512 kcal, "food name" may include food name information 1220 such as "chicken-breast salad," and "text content" may include text information 1225 having content "Today's diet [smiling emoji], good balance of carbohydrates, protein, and fat!!!." At least some of the components illustrated in FIG. 12 may be reordered, omitted, added, or modified.

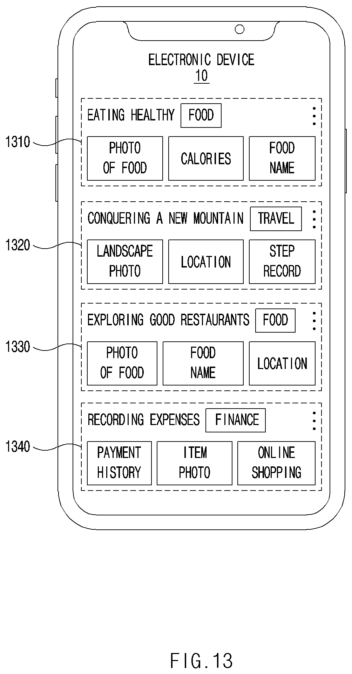

FIG. 13 is an exemplary view of a journal format list provided in the electronic device according to an embodiment.

Referring to FIG. 9a, FIG. 9b, and FIG. 13, the format generation module 320 of the electronic device 10 may generate a journal format and add the journal format to the journal format list. The journal format list may include a plurality of journal formats (e.g., Journal Format 1 1310, Journal Format 2 1320, Journal Format 3 1330, and Journal Format 4 1340). For example, based on a topic (e.g., an intent) "eating healthy," Journal Format 1 1310 may have a category "food," and components may include "photo of food," "calories," and/or "food name." Based on a topic "conquering a new mountain," Journal Format 2 1320 may have a category "travel," and components may include "landscape photo," "location," and/or "step record." Based on a topic "exploring good restaurants," Journal Format 3 1330 may have a category "food," and components may include "photo of food," "food name," and/or "location." Based on a topic "recording expenses," Journal Format 4 1340 may have a category "finance," and components may include "payment history," "item photo," and/or "online shopping." When comparing Journal Format 1 1310 and Journal Format 2 1330, even in the same category, journal formats may differ because components differ depending on a user's topic (e.g., intent).

FIG. 14 is an exemplary view of a report provided in the electronic device according to an embodiment.

Referring to FIG. 3 and FIG. 14, the electronic device 10 may generate, by using the report generation module 340, a report that provides information about content obtained by merging a plurality of journals and summarizing the merged journals. In an example, the report generation module 340 may merge journals generated or written during a specified period of time. The report generation module 340 may generate the report that provides information about content obtained by summarizing the merged content. The report generation module 340 may also provide a goal achievement rate based on a goal set by the user. The report generation module 340 may also provide information on the entire content, in addition to the summarized content of journals generated or written during the specified period of time.

In an embodiment, the report generation module 340 may generate a report that integrates and summarizes journals that are periodically generated or directly written by the user. In an example, the report generation module 340 may identify journals based on the same category in the journal list and generate a report that provides a summary of changes over time. For example, the report generation module 340 may identify journals based on a category "exercise," and may provide a summary of changes in exercise time, the number of exercise routines, and the like by month. In an example, when the user sets a goal for a specific category, the report generation module 340 may identify, from journals based on the specific category, records for achieving the goal and provide information on a goal achievement status. For example, when the user sets a goal of exercising for 2 hours and 3 times per week, the report generation module 340 may identify journals based on the category "exercise" and provide a status for the goal. For example, status information on exercise time and status information on a weekly number of exercises may be provided separately or together.

In an example, the report generation module 340 may calculate descriptive statistics (e.g., an average) from a plurality of journals or present calculated information as visualization data. In an example, the report generation module 340 may present a predicted value for the user's future using an artificial intelligence model (e.g., a machine learning model). For example, the report generation module 340 may calculate and provide an expected numerical value for a current month based on the currently generated report.

Referring to the report illustrated in FIG. 14, the report may include at least one of a period 1405, a topic 1410, a goal 1420, a goal achievement rate 1430, a number of food images 1440, an average calorie 1450, or a most frequent food 1460. In an example, when the report is generated by merging and summarizing journals written or generated during a specified period of time, the period 1405 may indicate the specified period of time. For example, the report of FIG. 14 may be a report obtained by merging and summarizing journals generated or written over a total of 1 year and 3 months.

In an example, the topic 1410 may indicate a user's intent. For example, in the report of FIG. 14, the user's intent may be "eating healthy." Even when the report has the same category, the content of the report may differ depending on the user's intent. For example, even with the same category "food," the content of the report may differ between a case where the user's intent is "eating healthy" and a case where the user's intent is "exploring good restaurants."

In an example, the goal 1420 may provide information on a goal set in relation to the topic. For example, in the report of FIG. 14, the user's goal 1420 may be "record diet at least 3 times per week." In an example, the report generation module 340 may provide a recommended goal. For example, the report generation module 340 may provide the recommended goal based on user information and/or a journal format. For example, in the report of FIG. 14, the report generation module 340 may provide a recommended goal such as "eat raw vegetables at least once a day." In an example, the recommended goal may be modified by the user.

The goal achievement rate 1430 may provide information on an achievement rate of the goal set by the user. For example, in the report of FIG. 14, the user's goal achievement rate 1430 may be 92%.

The number of food images 1440 may indicate a total number of food images of journals merged into the report. For example, in the report of FIG. 14, the number of food images of merged journals over 1 year and 3 months may be 176.

The calorie 1450 may indicate an average of calories described in journals merged into the report. For example, each journal format may include "calories" as a component. In the report of FIG. 14, the average of calories described in each merged journal over 1 year and 3 months may be 435 kcal.

The most frequent food 1460 may indicate a food eaten most frequently during the merged periods. For example, in the report of FIG. 14, based on the merged journals over 1 year and 3 months, an image most frequently written as a food image may be an image of a tomato mozzarella salad.

In an example, journals may be merged into the report not only for the same category but also for different categories when the journals correspond to those written or generated during the specified period of time. For example, a comprehensive report providing information on contents obtained by merging and summarizing all journals written or generated for the user over one week may also be provided.

In an example, the report may be shared with an external electronic device. For example, the electronic device 10 may share the report with an external electronic device in which a report of the same topic is stored. The electronic device 10 may provide, to the user, a report of an external user obtained from the external electronic device.

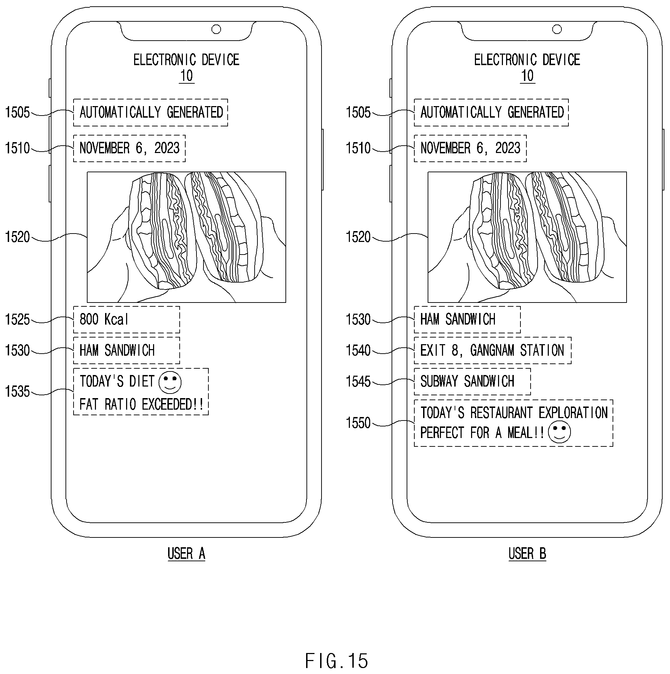

FIG. 15 is an exemplary view of a user journal written based on a user interest according to an embodiment.

Referring to FIG. 15, the electronic device 10 may acquire image information 1520 corresponding to a photo of food and generate a user journal. A method of generating the user journal based on new user information is as described herein with reference to FIG. 6a to FIG. 10. Text information 1505 may refer to information generated by the journal generation module 330 in FIG. 3.

The electronic device 10 may generate different journals according to an interest of a user (e.g., user A or user B) even when the same user information (e.g., the image information 1520) is used. For example, even when a format of the user journal has the same category, components thereof may differ.

For example, in the case of a user interested in healthy eating (e.g., user A), among formats included in the journal format list of the electronic device 10, a format having a category of "food" may correspond to a format including components such as "calories" or "nutritional components of food" (e.g., Journal Format 1 1310 of FIG. 13). In this case, when the user interested in healthy eating takes a photo of food, the electronic device 10 may generate a journal format including at least one of "date," "photo of food," "calories," "food name," or "text content" based on the category "food." The electronic device 10 may generate the user journal by using date information 1510, the image information 1520, calorie information 1525, food name information 1530, and text content information 1535 in a format corresponding to the journal format.

For example, in the case of a user interested in exploring good restaurants (e.g., user B), among formats included in the journal format list of the electronic device 10, the format having the category "food" may correspond to a format including components such as "restaurant location" or "food name" (e.g., Journal Format 3 1330 of FIG. 13). When the user interested in exploring good restaurants takes a photo of food, the electronic device 10 may generate a journal format including at least one of "date," "photo of food," "food name," "restaurant location," "restaurant name," or "text content" based on the category "food." In addition, components of the generated journal format may further include "restaurant review" and/or "restaurant rating." The electronic device 10 may generate the user journal using the date information 1510, the image information 1520, the food name information 1530, restaurant location information 1540, restaurant name information 1545, and the text content information 1535 in a format corresponding to the journal format.

FIG. 16 is a block diagram illustrating an electronic device 1601 in a network environment 1600 according to various embodiments. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to one embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, a HDMI connector, a USB connector, a SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to one embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

In an embodiment according to the present disclosure, an electronic device may include a memory and at least one processor electrically connected to the memory.

In an embodiment according to the present disclosure, the at least one processor may determine a journal category and at least one journal component for generating a user journal, based on user information stored in the memory.

In an embodiment according to the present disclosure, the at least one processor may obtain a user journal format based on the determined journal category and the at least one journal component.

In an embodiment according to the present disclosure, the at least one processor may generate the user journal in a format corresponding to the obtained user journal format.

In an embodiment according to the present disclosure, the at least one processor may identify a category from the user information.

In an embodiment according to the present disclosure, the at least one processor may search for additional user information, which is different from the user information and stored in the memory.

In an embodiment according to the present disclosure, the at least one processor may identify an additional category from the retrieved additional user information.

In an embodiment according to the present disclosure, the at least one processor may determine whether the additional category is identical to the category.

In an embodiment according to the present disclosure, the at least one processor may identify at least one component from at least one of the additional user information or the user information, based on a determination that the additional category is identical to the category.

In an embodiment according to the present disclosure, the journal category may include the identified category, and the at least one journal component may include the identified at least one component.

In an embodiment according to the present disclosure, the at least one processor may determine whether a journal format including the journal category and the at least one journal component is included in a journal format list stored in the memory.

In an embodiment according to the present disclosure, the at least one processor may obtain the user journal format including the journal format, based on a determination that the journal format is included in the journal format list.

In an embodiment according to the present disclosure, the at least one processor may identify at least one additional component from the journal category and the identified at least one component using a vector database, based on a determination that the journal format is not stored in the journal format list.

In an embodiment according to the present disclosure, the at least one journal component may further include the identified at least one additional component.

In an embodiment according to the present disclosure, the at least one processor may generate a recommended journal format including the journal category and the at least one journal component.

In an embodiment according to the present disclosure, the at least one processor may provide information on the recommended journal format to a user.

In an embodiment according to the present disclosure, the at least one processor may identify at least one final component of the recommended journal format, based on a user input of the user.

In an embodiment according to the present disclosure, the at least one processor may generate a final journal format including the journal category and the identified at least one final component.

In an embodiment according to the present disclosure, the at least one processor may obtain the user journal format including the generated final journal format.

In an embodiment according to the present disclosure, the at least one processor may add the generated final journal format to the journal format list.

In an embodiment according to the present disclosure, the user information and the additional user information may include at least one of text information, image information, voice information, activity information, biometric information, or location information associated with the user.

In an embodiment according to the present disclosure, the at least one processor may generate the user journal from at least one of the at least one piece of user information, the at least one piece of additional user information, or information obtained from an external server using a large language model (LLM), based on the user journal format.

In an embodiment according to the present disclosure, the at least one processor may identify a journal characteristic of the user, based on at least one of the at least one piece of user information or the at least one piece of additional user information.

In an embodiment according to the present disclosure, the at least one processor may generate the user journal using the journal characteristic of the user.

In an embodiment according to the present disclosure, the journal characteristic of the user may include at least one of a language habit, an intent, a word frequency, or a sentiment of the user related to a journal.

In an embodiment according to the present disclosure, the at least one processor may provide the generated user journal to the user.

In an embodiment according to the present disclosure, the at least one processor may generate a final user journal based on a user input of the user.

In an embodiment according to the present disclosure, the at least one processor may add the final user journal to a journal list.

In an embodiment according to the present disclosure, the at least one processor may generate a report based on at least one of a journal written by the user or the generated user journal, during a specified period of time.

In an embodiment according to the present disclosure, the at least one processor may allow the report to be shared with an external electronic device.

In an embodiment according to the present disclosure, a method using an electronic device may include determining a journal category and at least one journal component for generating a user journal, based on user information stored in the electronic device.

In an embodiment according to the present disclosure, the method using an electronic device may include obtaining a user journal format based on the determined journal category and the at least one journal component.

In an embodiment according to the present disclosure, the method using an electronic device may include generating the user journal in a format corresponding to the obtained user journal format.

In an embodiment according to the present disclosure, the method using an electronic device may include identifying a category from the user information.

In an embodiment according to the present disclosure, the method using an electronic device may include searching for additional user information, which is different from the user information and stored in the electronic device.

In an embodiment according to the present disclosure, the method using an electronic device may include identifying an additional category from the retrieved additional user information.

In an embodiment according to the present disclosure, the method using an electronic device may include determining whether the additional category is identical to the category.

In an embodiment according to the present disclosure, the method using an electronic device may further include identifying at least one component from at least one of the additional user information or the user information, based on a determination that the additional category is identical to the category.

In an embodiment according to the present disclosure, in the method using an electronic device, the journal category may include the identified category, and the at least one journal component may include the identified at least one component.

In an embodiment according to the present disclosure, the method using an electronic device may include determining whether a journal format including the journal category and the at least one journal component is included in a journal format list stored in the electronic device.

In an embodiment according to the present disclosure, the method using an electronic device may further include obtaining the user journal format including the journal format, based on a determination that the journal format is included in the journal format list.

In an embodiment according to the present disclosure, the method using an electronic device may include determining whether the journal format including the journal category and the at least one journal component is included in a journal format list stored in the memory.

In an embodiment according to the present disclosure, the method using an electronic device may further include identifying at least one additional component from the journal category and the identified at least one component using a vector database, based on a determination that the journal format is not stored in the journal format list.

In an embodiment according to the present disclosure, in the method using an electronic device, the at least one journal component may further include the identified at least one additional component.

In an embodiment according to the present disclosure, the method using an electronic device may include generating a recommended journal format including the journal category and the at least one journal component.

In an embodiment according to the present disclosure, the method using an electronic device may further include providing information on the recommended journal format to a user.

In an embodiment according to the present disclosure, the method using an electronic device may include identifying at least one final component of the recommended journal format, based on a user input of the user.

In an embodiment according to the present disclosure, the method using an electronic device may include generating a final journal format including the journal category and the identified at least one final component.

In an embodiment according to the present disclosure, the method using an electronic device may further include obtaining the user journal format including the generated final journal format.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a memory; and
at least one processor electrically connected to the memory,
wherein the at least one processor is configured to:
determine, based on user information stored in the memory, a journal category and at least one journal component for generating a user journal;
obtain, based on the determined journal category and the at least one journal component, a user journal format; and
generate the user journal in a format corresponding to the obtained user journal format.

2. The electronic device of claim 1, wherein the at least one processor is further configured to:
identify category from the user information;
search for additional user information that is different from the user information and stored in the memory;
identify additional category from the retrieved additional user information;
determine whether the additional category is identical to the category; and
identify, based on a determination that the additional category is identical to the category, at least one component from at least one of the additional user information or the user information, and
wherein the journal category includes the identified category, and the at least one journal component includes the at least one identified component.

3. The electronic device of claim 2, wherein the at least one processor is further configured to:
determine whether a journal format including the journal category and the at least one journal component is included in a journal format list stored in the memory; and
obtain, based on a determination that the journal format is included in the journal format list, the user journal format including the journal format.

4. The electronic device of claim 2, wherein the at least one processor is further configured to:
determine whether a journal format including the journal category and the at least one journal component is included in a journal format list stored in the memory; and
identify, based on a determination that the journal format is not stored in the journal format list, at least one additional component from the journal category and the identified at least one component using a vector database, and
wherein the at least one journal component further includes the identified at least one additional component.

5. The electronic device of claim 4, wherein the at least one processor is further configured to:
generate a recommended journal format including the journal category and the at least one journal component; and
provide information about the recommended journal format to a user.

6. The electronic device of claim 5, wherein the at least one processor is further configured to:
identify, based on the user's user input, at least one final component of the recommended journal format;
generate a final journal format including the journal category and the identified at least one final component; and
obtain the user journal format including the generated final journal format.

7. The electronic device of claim 6, wherein the at least one processor is further configured to add the generated final journal format to the journal format list.

8. The electronic device of claim 2, wherein the user information and the additional user information include at least one of text information, image information, voice information, activity information, biometric information, or location information associated with a user.

9. The electronic device of claim 2, wherein the at least one processor is further configured to generate, based on the user journal format, the user journal from at least one of the at least one piece of user information, the at least one piece of additional user information, or information obtained from an external server using a large language model (LLM).

10. The electronic device of claim 9, wherein the at least one processor is further configured to:
identify a journal characteristic of a user based on at least one of the at least one piece of user information or the at least one piece of additional user information; and
generate the user journal using the journal characteristic of the user.

11. The electronic device of claim 10, wherein the journal characteristic of the user includes at least one of the user's language habit, intent, word frequency, or sentiment associated with the journal.

12. The electronic device of claim 1, wherein the at least one processor is further configured to:
provide the generated user journal to a user;
generate, based on the user's user input, a final user journal; and
add the final user journal to a journal list.

13. The electronic device of claim 1, wherein the at least one processor is further configured to generate, based on at least one of a user-written journal or the generated user journal, a report during a specified period of time.

14. The electronic device of claim 13, wherein the at least one processor is further configured to share the report with an external electronic device.

15. A method using an electronic device, the method comprising:
determining, based on user information stored in the electronic device, a journal category and at least one journal component for generating a user journal;
obtaining, based on the determined journal category and at least one journal component, a user journal format; and
generating the user journal in a format corresponding to the obtained user journal format.
